# EUROPEAN PATENT APPLICATION

(11) **EP 3 951 462 A1**
(43) Date of publication of application: **09.02.2022**
(21) Application number: 21171834.1
(22) Date of filing: 03.05.2021
(51) Int. Cl.: G02B 6/44

(54) **HEAT RESISTANT WATER BLOCKING TAPE**

(30) Priority: 07.08.2020 IN 202011033983
(71) Applicant: Sterlite Technologies Limited, Haryana 122002 (IN)
(72) Inventor: SAHOO, Kishore Chandra, 122002 Haryana (IN); SOME, Sashanka S, 122002 Haryana (IN); GHORPADE, Santosh, 122002 Haryana (IN)
(74) Representative: Hepworth Browne

(57) **Abstract**

The present disclosure provides a heat resistant water blocking tape (100) for an optical fiber cable includes a first layer (102), super absorbent powder (104), a second layer (106), and a third layer (108). In particular, the first layer (102) and the third layer (108) are made of a non-woven fabric. And, the second layer (106) is a layer of polyethylene film. Moreover, the second layer (106) is sandwiched between the first layer (102) and the third layer (108). Further, the super absorbent powder (104) is sandwiched between the first layer (102) and the second layer (106) and the second layer (106) and the third layer (108).

## Description

### TECHNICAL FIELD

Embodiments of the present disclosure relate to a field optical fiber cable. And more particularly, relates to a heat resistant water blocking tape.

The present application claims the benefit of Indian Application No. 202011033983 titled **"Heat Resistant Water Blocking Tape"** filed by the applicant on 7^{th} August 2020, which is incorporated herein by reference in its entirety.

### Background Art

Optical fiber cables have secured an important position in building optical networks of modern communication systems across the world. The optical fiber cables are sensitive to a plurality of conditions. The plurality of conditions includes crushes, kinks, bends, presence of water and/or moisture, and the like. Specifically, the ingression of water in the due course of time degrades the optical fiber cables.

In addition, change in ambient conditions leads to vapour pressure difference between inner side and outer side of a sheath of the optical fiber cable. Further, the vapour pressure difference diffuses moisture in a unidirectional manner from the outer side to the inner side of the sheath of the optical fiber cable. Furthermore, this leads to undesirable high moisture levels inside the optical fiber cable, specifically when the sheath is the only barrier to the ingression of water. Moreover, the ingression of water may be caused due to damages to the optical fiber cable because of a plurality of factors. The plurality of factors includes rodent attacks and mechanical impacts.

Japanese patent Application "JP2004071475" titled "Water sealing tape for power cable" discloses a water barrier tape including polyethylene film layer.

Korean patent Application "KR102058013" titled "Water blocking tape using co-extruded film" discloses a polyethylene film provided on both sides of elastomeric film to block water.

In general, water blocking tape is used inside the optical fiber cable to protect the optical fiber cable from the ingression of water. In addition, the water blocking tape acts as a barrier to resist heat transfer between the sheath and a core of the optical fiber cable. The core comprises a plurality of optical transmission elements either in a loose tube configuration or in a tight buffered configuration or the like.

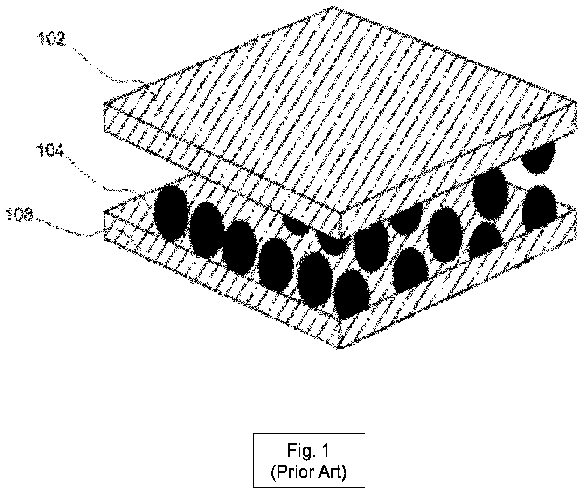

Hereinafter, related art for a conventional water blocking tape will be described with reference to Fig.1 in order to facilitate an understanding of the inventive concept.

Fig. 1 illustrates a double layer design of the conventional water blocking tape in accordance with a disclosed prior art. In particular, the disclosed conventional water blocking tape has a superabsorbent powder sandwiched between two non-woven tapes.

However, the conventional water blocking tape deforms due to excess heat transfer during the sheath extrusion process carried out at high temperatures up to 250 degree Celsius. In addition, the deformation of the conventional water blocking tape leads to damage of the core of the optical fiber cable and results in degradation of optical properties of the plurality of optical transmission elements (optical fibers). Further, the conventional water blocking tape breaks during the extrusion process.

There is an urgent need for a technical solution that overcomes the above stated limitations in the prior arts such as inability of the conventional water blocking tape to withstand high heat/temperature and to address above constraints and limitations and to provide an improved heat resistant water blocking tape for use in an optical fiber cable.

### SUMMARY OF THE INVENTION

Embodiments of the present disclosure provide a heat resistant water blocking tape for use in an optical fiber cable. In particular, the heat resistant water blocking tape comprises at least one fabric, a water absorbent material on the at least one fabric and a heat blocking/reducing/absorbing layer.

In accordance with an embodiment of the present disclosure, the fabric comprises a non-woven fabric.

In accordance with an embodiment of the present disclosure, the fabric is applied as a top layer and as a bottom layer of the heat resistant water blocking tape.

In accordance with an embodiment of the present disclosure, the thickness of the top layer is in a range of 0.05 millimeter to 0.25 millimeter.

In accordance with an embodiment of the present disclosure, a thickness of the bottom layer is in a range of 0.05 millimeter to 0.25 millimeter.

In accordance with an embodiment of the present disclosure, the water absorbent material on the fabric is a superabsorbent powder.

In accordance with an embodiment of the present disclosure,the heat blocking/reducing/absorbing layer comprises a polyfilm or polyethylene layer.

In accordance with an embodiment of the present disclosure, the heat blocking/reducing/absorbing layer is sandwiched between the fabric layers.

In accordance with an embodiment of the present disclosure, the heat blocking/reducing/absorbing layer has a thickness in the range of 0.05 millimeter to 0.25 millimeter.

In accordance with an embodiment of the present disclosure, the water absorbent material on the fabric is applied on sides facing the heat blocking/reducing/absorbing layer.

In accordance with an embodiment of the present disclosure, the heat resistant water blocking tape withstands a temperature up to 250° C.

In accordance with an embodiment of the present disclosure,the second layer is positioned between the first layer and the third layer of the fabric.

In accordance with an embodiment of the present disclosure, the third layer is the bottom layer of the heat resistant water blocking tape.

In accordance with an embodiment of the present disclosure, the third layer has a thickness in the range of 0.05 millimeter to 0.25 millimeter.

According to a first aspect, the heat resistant water blocking tape is wrapped around a core of any optical fiber cable. The core of the optical fiber cable comprises a plurality of optical transmission elements.

According to a second aspect, the heat resistant water blocking tape is made of one or more of a non-woven fabric and a polyethylene film. In particular, the heat resistant water blocking tape further includes a first layer, super absorbent powder, a second layer and a third layer.

According to a third aspect, the first layer is the top layer of the heat resistant water blocking tape. The first layer is a non-woven water blocking layer.

In particular, the first layer is made of non-woven fabric. And, non-woven fabric includes but may not be limited to polyester, nylon, acrylic and rubber. The first layer has one or more characteristics. The one or more characteristics include flexibility, absorbency, water resistance, and heat resistance.

According to the fourth aspect of the disclosure, the second layer is the middle layer of the heat resistant water blocking tape. In particular, the second layer is a layer made of polyethylene film. Moreover, the second layer acts as a heat barrier and prevents transferring of heat through the heat resistant water blocking tape.

In accordance with an embodiment of the present disclosure, the second layer is positioned between the first layer and the third layer.

According to the fifth aspect of the disclosure, the third layer is the bottom layer of the heat resistant water blocking tape.

According to the sixth aspect of the disclosure, the super absorbent powder is sandwiched between the first layer and the second layer. Also, the super absorbent powder is sandwiched between the second layer and the third layer.

In accordance with one or more embodiments of the present disclosure,the super absorbent powder has capability to absorb and retain extremely high volume of liquids. In an example, liquid may be water.

The fabric is applied as a top layer and a bottom layer of the heat resistant water blocking tape.

In an aspect of the present disclosure, the heat resistant water blocking tape that is resistant to water penetration and heat inside the core of an optical fiber cable.

According to the foregoing solutions, the heat resistant water blocking tape is provided for use in an optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Having thus described the disclosure in general terms, reference will now be made to the accompanying figures, wherein:
Fig. 1 illustrates a double layer design of the conventional water blocking tape in accordance with a disclosed prior art;
Fig. 2 illustrates an isometric exploded view of a heat resistant water blocking tape for an optical fiber cable in accordance with an embodiment of the present disclosure.

### REFERENCE LIST

Heat Resistant Water Blocking Tape 100
Fabric 102, 108
Water Absorbent Material 104
Heat Blocking/Reducing/Absorbing Layer 106

The heat resistant water blocking tape illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### Following terms shall apply throughout the present disclosure:

Super absorbent powder may synonymously be called as water absorbent material and are used interchangeably for convenience.

The first layer may synonymously be called a top layer and are used interchangeably for convenience.

The third layer may synonymously be called the bottom layer and are used interchangeably for convenience.

The second layer may synonymously be called as a heat blocking/reducing/absorbing layer and are used interchangeably for convenience.

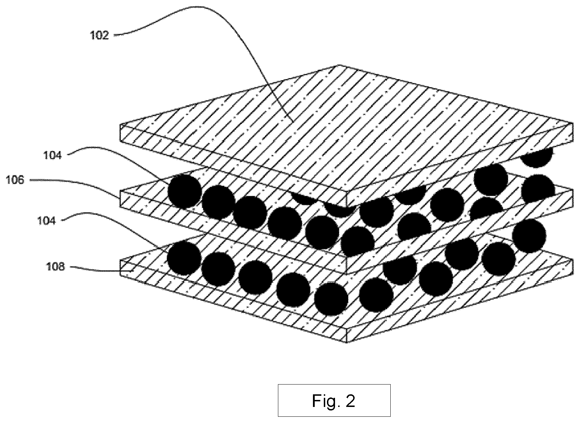

Fig. 2 illustrates an isometric exploded view of a heat resistant water blocking tape for an optical fiber cable in accordance with an embodiment of the present disclosure. Particularly, the heat resistant water blocking tape 100 is resistant to water penetration and heat. Moreover, the heat resistant water blocking tape 100 is made of at least one fabric and a polyethylene film.

In accordance with an embodiment of the present disclosure, the heat resistant water blocking tape 100 includes at least one fabric 102, 108, a water absorbent material/super absorbent powder 104 on the fabric 102, 108 , and a heat blocking/reducing/absorbing layer 106. Moreover, the fabric is applied as a first layer 102 and a third layer 108 of the heat resistant water blocking tape 100.

In accordance with an embodiment of the present disclosure, the first layer 102 is the top layer of the heat resistant water blocking tape 100. Particularly, the first layer 102 is a non-woven water blocking layer. The one or more characteristics of the first layer 102 include but may not be limited to flexibility, absorbency, water resistance, and heat resistance to some extent.

In accordance with an embodiment of the present disclosure, the non-woven fabric of the first layer 102 includes but may not be limited to polyester, nylon, acrylic and rubber.

In accordance with an embodiment of the present disclosure, the first layer 102 has a thickness in the range of 0.05 millimeter to 0.25 millimeter. The thickness of the first layer below 0.5 millimeter limits the manufacturing capabilities of the heat resistant water blocking tape. Further, the thickness beyond 0.25 millimeter may result in an increase in the cable diameter by more than 0.25 millimeter which is undesirable.

In accordance with an embodiment of the present disclosure, the second layer 106 is the middle layer of the heat resistant water blocking tape 100. In particular, the second layer 106 is a layer of polyethylene film or polyfilm. Moreover, the second layer 106 prevents breaks in the heat resistant water blocking tape 100. Further, the second layer 106 acts as heat barrier and prevents transferring of heat through the heat resistant water blocking tape 100 inside the core of the cable.

In addition, the second layer 106 provides tensile strength to the heat resistant water blocking tape 100.

Advantageously, the tensile strength of the heat resistant water blocking tape 100 is almost 3.5 times that of conventional tape (as shown in prior art FIG. 1).

The second layer 106 has a thickness in range of 0.05 millimeter to 0.25 millimeter. The thickness of the second layer below 0.05 millimeter may impose limitations in the manufacturing capabilities of the heat resistant water blocking tape. The thickness of the second layer above 0.05 millimeter results in an increase in cable diameter by more than 0.25 millimeter, which is not desired. The thickness of the second layer up to 0.05 millimeter is sufficient to provide heat protection during a sheathing process.

In accordance with an embodiment of the present disclosure, the second layer 106 may reduce transmission of thermal conduction across the heat resistant water blocking tape 100 at elevated temperature. The elevated temperature in the sheathing process can raise up to 250° C.

In accordance with an embodiment of the present disclosure, the second layer 106 may produce insulating carbonaceous foam at the elevated temperature. The insulating carbonaceous foam reduces transmission of thermal conduction across the heat resistant water blocking tape 100 at the elevated temperature. The elevated temperature in the sheathing process can raise up to 250° C.

In accordance with an embodiment of the present disclosure, the second layer 106 is sandwiched between the fabric. In particular, the second layer 106 is positioned between the first layer 102 and the third layer 108 of the fabric.

In accordance with an embodiment of the present disclosure, the third layer 108 is the bottom layer of the heat resistant water blocking tape 100. In particular, the third layer 108 has the same properties as the first layer 102. Moreover, the third layer 108 corresponds to a non-woven tape.

The third layer 108 has a thickness in range of 0.05 millimeter to 0.25 millimeter. The thickness of the third layer below 0.05 millimetre may impose limitations in the manufacturing capabilities of the heat resistant water blocking tape. The thickness of the third layer above 0.25 millimeter may increase the cable diameter more than 0.25 millimeter, which is not desired. The third layer 108 has one or more characteristics. The one or more characteristics include but may not be limited to flexibility, absorbency, water resistance, and heat resistance.

In accordance with an embodiment of the present disclosure, the heat resistant water blocking tape 100 includes the super absorbent powder 104. In particular, the super absorbent powder 104 is applied on the fabric. Moreover, the super absorbent powder 104 on the at least one fabric is applied on a side facing the second layer 106. If applied outside, it may fall-off and create undesired powder dust. Further, the super absorbent powder 104 is sandwiched between the first layer 102 and the second layer 106.

In addition, the super absorbent powder 104 is sandwiched between the second layer 106 and the third layer 108. The super absorbent powder 104 has capability to absorb and retain extremely high volume of liquids.

In an exemplary example, the super absorbent powder 104 has capability to absorb and retain water.

In particular, the heat resistant water blocking tape 100 is wrapped around a core of any optical fiber cable. And, the core may comprise a plurality of optical transmission elements. Moreover, the plurality of optical transmission elements may present in form of, but not limited to, a plurality of optical fibers, a group of loose optical fibers, a group of optical fiber ribbons or a stack of optical fiber ribbons, a plurality of buffer tubes, a plurality of tight buffered optical fibers over which a sheathing is done.

In accordance with an embodiment of the present disclosure, the optical fibers may be a single mode optical fiber, a multicore optical fiber, a multimode optical fiber or the like.

In accordance with one aspect of the present disclosure, the single mode optical fiber carries only a single mode of light.

In accordance with another aspect of the present disclosure, the multimode optical fiber carries multiple modes of light to propagate. In particular, the multicore optical fibers comprises multiple cores as opposed to the single mode optical fiber and the multimode optical fibers that comprises only a single core.

In an exemplary example, the heat resistant water blocking tape 100 may be positioned between a sheath and the core of the optical fiber cables requiring water blocking tape with better tensile strength or heat protection for the core.

In accordance with another embodiment of the present disclosure, the plurality of optical transmission elements may be present in form of, but not limited to, the plurality of optical fibers, the group of loose optical fibers, the group/bundle of optical fiber ribbons or the stack of optical fiber ribbons, the plurality of buffer tubes, the plurality of tight buffered optical fibers over which the sheathing is done.

In accordance with another embodiment of the present disclosure, a loose tube from the group of loose tubes comprises the plurality of optical fibers. Further, the plurality of buffer tubes is an encasement tube used to encapsulate a number of optical fibers or an optical fiber ribbon stack. The buffer tube is used in an optical fiber cable to provide mechanical isolation and protection from physical damages. The plurality of buffer tubes includes the plurality of optical transmission elements. The heat resistant water blocking tape 100 prevents damage to the plurality of optical transmission elements present inside the plurality of buffer tubes.

In accordance with another embodiment of the present disclosure, the optical fiber ribbon bundle is a group of a plurality of optical fiber ribbons arranged together. The optical fiber ribbon includes a number of optical fibers arranged together within a matrix material. In addition, multiple individual optical fiber ribbons are stacked or grouped into bundles to form the optical fiber ribbon bundle.

Further, optical fiber refers to a medium associated with transmission of information over long distances in the form of light pulses. Furthermore, the optical fiber uses light to transmit voice and data communications over long distances. The heat resistant water blocking tape 100 may surround the optical fiber ribbon bundle. The heat resistant water blocking tape 100 may surround the plurality of optical fibers.

In an alternate embodiment, the optical fiber ribbon bundle or the plurality of optical fibers is placed inside the buffer tube and then surrounded by the heat resistant tape.

In accordance with an embodiment of the present disclosure, the sheathing (extrusion) is done at high temperature (more than 100°C), which sometimes damages cable core and/or water blocking tape. The sheathing is a process of squeezing a sheathing material through a funnel of a die as the core runs through the center. To prevent the damage, the heat resistance water blocking tape 100 is made in such a way that withstands temperature up to 250°C and may be used in any optical fiber cable to provide heat resistance and water blocking properties to the optical fiber cable. The core of the optical fiber cable may include the plurality of optical transmission elements. The plurality of optical transmission elements presents in the form of, but not limited to, the plurality of optical fibers, the group of loose optical fibers, the group/bundle of optical fiber ribbons or the stack of optical fiber ribbons, the plurality of buffer tubes, the plurality of tight buffered optical fibers over which the sheathing is done.

In accordance with an embodiment of the present disclosure, the sheathing material may include, but not limited to, polyvinylchloride, polyethylene (such as High Density Poly Ethylene (HDPE), Medium Density Poly Ethylene, and Low Density Poly Ethylene), polyurethane, thermoplastic rubber/elastomer, thermoplastic chlorinated polyethylene, thermoset polyolefins or combination thereof.

Overall, the present disclosure provides heat resistant water blocking tape provides advantages such as resistance to water penetration and heat inside the optical fiber cable, high tensile strength and the like.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The present invention also contemplates embodiments set out in the following numbered clauses:
1. A heat resistant water blocking tape (100) for use in an optical fiber cable comprising:
   at least one fabric (102, 108);
   a water absorbent material (104) on the at least one fabric (102, 108); and
   a heat blocking/reducing/absorbing layer (106).
2. The heat resistant water blocking tape (100) of clause 1, wherein the at least one fabric is applied as a top layer (102) and as a bottom layer (108) of the heat resistant water blocking tape (100).
3. The heat resistant water blocking tape (100) of clause 2, wherein the thickness of the top layer (102) is in a range of 0.05 millimeter to 0.25 millimeter.
4. The heat resistant water blocking tape (100) of clause 2 or clause 3, wherein the thickness of the bottom layer (108) is in a range of 0.05 millimeter to 0.25 millimeter.
5. The heat resistant water blocking tape (100) of clause 2 to clause 4, wherein the top layer (102) is a non-woven fabric.
6. The heat resistant water blocking tape (100) of clause 2 to clause 5, wherein the bottom layer (108) is a non-woven fabric.
7. The heat resistant water blocking tape (100) of any preceding clause, wherein the water absorbent material (104) on the at least one fabric is a superabsorbent powder.
8. The heat resistant water blocking tape (100) of any preceding clause, wherein the heat blocking/reducing/absorbing layer (106) comprises a polyfilm or polyethylene layer.
9. The heat resistant water blocking tape (100) of clause 8, wherein the heat blocking/reducing/absorbing layer (106) is sandwiched between the top layer (102) and the bottom layer (108).
10. The heat resistant water blocking tape (100) of clause 8 or clause 9, wherein the heat blocking/reducing/absorbing layer (106) has a thickness in a range of 0.05 millimeter to 0.25 millimeter.
11. The heat resistant water blocking tape (100) of any preceding clause, wherein the water absorbent material (104) on the at least one fabric is applied on a side facing the heat blocking/reducing/absorbing layer (106).
12. The heat resistant water blocking tape (100) of any preceding clause, wherein the heat resistant water blocking tape (100) withstands a temperature up to 250° C.
13. The heat resistant water blocking tape (100) of any preceding clause, wherein the heat resistant water blocking tape (100) is wrapped around a core of an optical fiber cable.
14. The heat resistant water blocking tape (100) of clause 7, wherein the super absorbent powder (104) is sandwiched between a first layer (102) and a second layer (106).
15. The heat resistant water blocking tape (100) of clause 7, wherein the super absorbent powder (104) is sandwiched between the second layer (106) and a third layer (108).
16. The heat resistant water blocking tape (100) of clause 2 to clause 15, wherein the top layer (102) is functional as the first layer of the heat resistant water blocking tape (100).
17. The heat resistant water blocking tape (100) of clause 2 to clause 16, wherein the bottom layer (108) is functional the third layer of the heat resistant water blocking tape (100).
18. The heat resistant water blocking tape (100) of any preceding clause, wherein the second layer (106) of the heat resistant water blocking tape (100) is functionally configured as a heat barrier for the core of the optical cable.
19. The heat resistant water blocking tape (100) of clause 5, wherein the non-woven fabric top layer (102) is selected from a polyester, a nylon, an acrylic and a rubber.
20. The heat resistant water blocking tape (100) of clause 6, wherein the non-woven fabric bottom layer (108) is selected from a polyester, a nylon, an acrylic and a rubber.

## Claims

1. A heat resistant water blocking tape (100) for use in an optical fiber cable comprising:
at least one fabric (102, 108);
a water absorbent material (104) on the at least one fabric (102, 108); and
a heat blocking/reducing/absorbing layer (106).

2. The heat resistant water blocking tape (100) as claimed in claim 1, wherein the at least one fabric is applied as a top layer (102) and as a bottom layer (108) of the heat resistant water blocking tape (100).

3. The heat resistant water blocking tape (100) as claimed in claim 2, wherein the thickness of the top layer (102) is in a range of 0.05 millimeter to 0.25 millimeter; and/or the thickness of the bottom layer (108) is in a range of 0.05 millimeter to 0.25 millimeter.

4. The heat resistant water blocking tape (100) as claimed in claim 2 or claim 3, wherein the top layer (102) is a non-woven fabric and/or the bottom layer (108) is a non-woven fabric.

5. The heat resistant water blocking tape (100) as claimed any preceding claim, wherein the water absorbent material (104) on the at least one fabric is a superabsorbent powder.

6. The heat resistant water blocking tape (100) as claimed any preceding claim, wherein the heat blocking/reducing/absorbing layer (106) comprises a polyfilm or polyethylene layer.

7. The heat resistant water blocking tape (100) as claimed in claim 6, wherein the heat blocking/reducing/absorbing layer (106) is sandwiched between the top layer (102) and the bottom layer (108).

8. The heat resistant water blocking tape (100) as claimed in any preceding claim, wherein the water absorbent material (104) on the at least one fabric is applied on a side facing the heat blocking/reducing/absorbing layer (106).

9. The heat resistant water blocking tape (100) as claimed any preceding claim, wherein the heat resistant water blocking tape (100) is wrapped around a core of an optical fiber cable.

10. The heat resistant water blocking tape (100) as claimed in claim 5, wherein the super absorbent powder (104) is sandwiched between a first layer (102) and a second layer (106) and/or the super absorbent powder (104) is sandwiched between the second layer (106) and a third layer (108).

11. The heat resistant water blocking tape (100) as claimed in claim 2 to claim 10, wherein the top layer (102) is functional as the first layer of the heat resistant water blocking tape (100).

12. The heat resistant water blocking tape (100) as claimed in claim 2 to claim 11, wherein the bottom layer (108) is functional as the third layer of the heat resistant water blocking tape (100).

13. The heat resistant water blocking tape (100) as claimed in claim 1, wherein the second layer (106) of the heat resistant water blocking tape (100) is functionally configured as a heat barrier for the core of the optical cable.

14. The heat resistant water blocking tape (100) as claimed in claim 4, wherein the non-woven fabric top layer (102) is selected from a polyester, a nylon, an acrylic and a rubber.

15. The heat resistant water blocking tape (100) as claimed in claim 4, wherein the non-woven fabric bottom layer (108) is selected from a polyester, a nylon, an acrylic and a rubber.
